# EUROPÄISCHE PATENTSCHRIFT

(11) **EP 3 765 759 B1**
(45) Veröffentlichungstag und Bekanntmachung des Hinweises auf die Patenterteilung: **04.05.2022**
(21) Anmeldenummer: 19710355.9
(22) Anmeldetag: 05.03.2019
(51) Int. Cl.: F16C 35/077, F16H 55/22

(54) **SCHRAUBRADGETRIEBE FÜR EINE ELEKTROMECHANISCHE SERVOLENKUNG MIT EINEM ASYMMETRISCH VORGESPANNTEN FESTLAGER**
HELICAL GEAR TRANSMISSION FOR AN ELECTROMECHANICAL SERVO STEERING WITH AN ASYMMETRICALLY PRETENSIONED FIXED BEARING
ENGRENAGE À ROUE HÉLICOÏDALE POUR DIRECTION ASSISTÉE ÉLECTROMÉCANIQUE AYANT UN PALIER FIXE PRÉCONTRAINT ASYMÉTRIQUEMENT

(30) Priorität: 15.03.2018 DE 102018106025
(43) Veröffentlichungstag der Anmeldung: 20.01.2021
(73) Patentinhaber: thyssenkrupp Presta AG, 9492 Eschen (LI); thyssenkrupp AG, 45143 Essen (DE)
(72) Erfinder: RATH, Krisztian, 1039 Budapest (HU)
(74) Vertreter: thyssenkrupp Intellectual Property GmbH
(86) Internationale Anmeldenummer: PCT/EP2019/055369
(87) Internationale Veröffentlichungsnummer: WO 2019/174963

(56) Entgegenhaltungen:
- DE-A1-102014 105 921
- DE-U1-202016 103 794
- DE-U1-202016 103 799

## Beschreibung

Die vorliegende Erfindung betrifft ein Schraubradgetriebe für eine elektromechanische Servolenkung mit den Merkmalen des Oberbegriffs des Anspruchs 1 sowie eine elektromechanische Servolenkung mit den Merkmalen des Oberbegriffs des Anspruchs 14.

In elektromechanischen Servolenkungen wird über einen Elektromotor ein Drehmoment erzeugt, das auf ein Getriebe übertragen und dort dem vom Fahrer gestellten Lenkmoment überlagert wird.

Eine gattungsgemäße elektromechanische Servolenkung weist einen elektrischen Servomotor auf, der eine Schneckenwelle antreibt, die mit einem auf einer Lenkwelle oder direkt auf einem Lenkritzel angeordneten Schneckenrad kämmt, wobei die Schneckenwelle in einem Getriebegehäuse drehbar gelagert ist. Die Schneckenwelle ist dabei mit der Motorwelle des elektrischen Servomotors über eine Kupplung verbunden.

Ein herkömmliches Schneckengetriebe hat am antriebsseitigen Ende ein Festlager und am freien Ende ein Loslager. Die lenkungsspezifischen Anforderungen erfordern dabei, dass das Schneckengetriebe geräuscharm ohne Klappern und Klopfen in Kombination mit geringer Reibung läuft. Dazu sollte das Zahnflankenspiel des Schneckengetriebes minimiert oder aufgehoben werden.

Im Stand der Technik ist es bekannt, die Schneckenwelle an einem antriebsseitigen Ende über ein erstes Wälzlager zu lagern, das eine gewisse Kippbewegung oder Schwenkbewegung quer zur axialen Richtung erlaubt, während am gegenüberliegenden Ende die Schneckenwelle in einem zweiten Wälzlager drehbar gelagert ist, wobei eine Vorrichtung zur Einstellung des Spiels des Verzahnungseingriffs vorgesehen ist. Damit kann die Schneckenwelle je nach Bedarf um das erste Wälzlager schwenken, um einen etwa gleichbleibenden Eingriff mit dem Schneckenrad zu gewährleisten.

Die DE 10 2013 003 749 A1 offenbart eine Lageranordnung für ein Getriebe einer Servolenkung. Die Schneckenwelle ist am motorseitigen Ende über ein Festlager und am gegenüberliegenden Ende durch ein loses Kugellager gelagert. Das lose Kugellager ist dabei durch ein Federelement derart kraftbeaufschlagt, dass die Schneckenwelle gegen das Schneckenrad vorgespannt ist. Das Festlager umfasst ein Kugellager, welches in radialer Richtung von einem Mantelelement umgeben ist, welches eine gewisse radiale Verformbarkeit aufweist und radial innen-oder außenseitig ein konvexes Profil im Querschnitt hat. Über dieses Mantelelement sowie optional über ein zwischengeordnetes elastisches Element stützt sich das Kugellager am Getriebegehäuse ab, wodurch die Schneckenwelle zusammen mit dem Kugellager um eine Schwenkachse, die das Festlager mittig durchsetzt, gekippt werden kann. Zur axialen Lagerbefestigung sind auf beiden Seiten des Festlagers Axialfederelemente, bestehend aus zwischen zwei Ringen angeordneten Elastomeren, vorgesehen. DE 20 2016 103799 U offenbart den Oberbegriff des Anspruchs 1.

Es ist eine Aufgabe der vorliegenden Erfindung ein Schraubradgetriebe bereitzustellen, welches eine Lageranordnung mit verbesserten Eigenschaften aufweist.

Diese Aufgabe wird von einem Schraubradgetriebe für eine elektromechanische Servolenkung mit den Merkmalen des Anspruchs 1 und einer elektromechanische Servolenkung mit den Merkmalen des Anspruchs 14 gelöst. Vorteilhafte Weiterbildungen ergeben sich aus den Unteransprüchen. Demnach ist ein Schraubradgetriebe für eine elektromechanische Servolenkung umfassend eine mit einem Schraubrad kämmende Welle, vorgesehen, wobei die Welle in einem Getriebegehäuse angeordnet ist und an ihrem ersten Ende in einer ersten Lageranordnung um eine Drehachse drehbar gelagert ist und an ihrem zweiten Ende in einer zweiten Lageranordnung in dem Getriebegehäuse gelagert ist, wobei die erste Lageranordnung ein Festlager aufweist. Das Festlager ist von zwei Lagerschalen umschlossen, wobei auf beiden Stirnseiten des Festlagers jeweils ein Federelement zwischen Festlager und entsprechender Lagerschale angeordnet ist, und wobei die Federelemente das Festlager asymmetrisch vorspannen, derart, dass eine Schwenkachse, um die die Welle in Richtung des Schraubrades schwenkbar ist, im Bereich der Verzahnungsebene von Welle und Schraubrad angeordnet ist.

Die Federelemente reduzieren die Axial-und Torsionssteifigkeit der Lagerbefestigung. Da ein Festlager eingesetzt wird, kann ein einfaches Rillenkugellager verwendet werden. Durch die asymmetrische Vorspannung liegt die Schwenkachse im Bereich der Verzahnungsebene, wodurch auf einfache Weise eine negative Kraftbeaufschlagung im Festlager reduziert werden kann. Vorzugsweise verläuft die Schwenkachse parallel zu der Drehachse im Eingriffsbereich zwischen Welle und Schraubrad, sodass dadurch kein Drehmoment in der Schwenkachse resultiert.

Bevorzugt ist die erste Lageranordnung die antriebsseitige Lageranordnung und die zweite Lageranordnung die antriebsferne Lageranordnung.

Die erste Lageranordnung weist bevorzugt einen Lageraußenring auf, welcher rotationssymmetrisch ausgebildet ist. Bevorzugt sind die Stirnseiten eben oder plan ausgebildet, das heißt, sie weisen keine Erhebungen, Abkantungen oder Ausnehmungen auf. Es ist denkbar und möglich, dass die Schwenkachse die Lageranordnung in Richtung der Drehachse mittig durchsetzt.

In einer Ausführungsform weisen die Lagerschalen jeweils einen Sitz mit mindestens einer hervorstehenden Stufe für ein Federelement auf, wobei die Stufen der beiden Lagerschalen, die Schwenkachse definieren. Die Lagerschalen sind besonders bevorzugt topfförmig geformt und weisen eine Bohrung im Boden zum Durchführen der Welle auf, wobei auf dem Boden der Sitz und die hervorstehende Stufe ausgebildet ist, an welcher das Federelement anliegt. Oder anders ausgedrückt: der Sitz wird auf der Innenseite der Lagerschale durch einen Bereich mit einem kleineren Innendurchmesser gebildet. Die Lagerschalen weisen eine Lagerschalentiefe auf. Die Lagerschalentiefe definiert einen Abstand der Lagerschale zwischen dem Boden der Lagerschale und der Aussenumfangsfläche der Lagerschale. Die Lagerschalentiefe ist durch die Stufe in eine erste Lagerschalentiefe und eine zweite Lagerschalentiefe unterteilt. Die erste Lagerschalentiefe ist dabei kleiner ausgebildet als die zweite Lagerschalentiefe. Die Stufe stellt damit einen Übergang von der ersten Lagerschalentiefe zu der zweiten Lagerschalentiefe dar. Der Bereich mit der ersten Lagerschalentiefe nimmt bevorzugt 2/3 von der Bodenumfangsfläche, beziehungsweise 2/3 von der Innenseite der Lagerschale im Bereich des kleineren Innendurchmessers, ein, während der Bereich mit der zweiten Lagerschalentiefe bevorzugt 1/3 der Bodenumfangsfläche der Lagerschale einnimmt. Der zweite Bereich mit der grösseren Breite ist bevorzugt in Umfangsrichtung des Schraubrads angeordnet.

Dabei ist es bevorzugt, wenn die Stufe sich jeweils in Umfangsrichtung über einen definierten Winkelbereich bezogen auf einen Innenumfang der Lagerschale, welcher sich zwischen 60° und 180° und bevorzugt sich zwischen 90° und 120° erstreckt. Zur Ausbildung der Asymmetrie sind die Stufen der beiden Lagerschalen bevorzugt in Umfangsrichtung gleich orientiert und liegen sich gegenüber.

Es ist vorteilhaft, wenn die Stufen der beiden Lagerschalen in Umfangsrichtung im Bereich des Schraubrades liegen.

Bevorzugt sind die Federelemente ringförmig und weisen einen Außendurchmesser auf, der in etwa dem Außendurchmesser des Festlagers entspricht.

In einer bevorzugten Ausführungsform ist das Festlager ein Wälzlager und/oder die Federelemente sind Wellfedern. Weiterhin ist es denkbar und möglich, dass die Federelemente scheibenförmige Flachfedern, wie beispielsweise Tellerfedern oder Federscheiben sind oder als Sprengring ausgebildet sind.

Es ist vorteilhaft, wenn die jeweilige Lagerschale auf der Außenumfangsseite mindestens einen Vorsprung als Verdrehsicherung aufweist, welcher in korrespondierende Ausnehmungen des Getriebegehäuses greift. So kann sichergestellt werden, dass die Lageranordnung mit der korrekten Orientierung eingesetzt wird. Es ist denkbar und möglich, dass auf der Aussenumfangsseite der jeweiligen Lagerschale mehr als ein Vorsprung vorgesehen ist.

Vorzugsweise weist die zweite Lageranordnung eine Vorspanneinrichtung auf, mittels derer die Lage der Welle in Bezug auf das Schraubrad einstellbar ist.

Bevorzugt ist das Schraubrad ein Schneckenrad und die Welle eine Schneckenwelle.

Die Lagerschalen können aus Kunststoff gefertigt sein.

Weiterhin ist eine elektromechanische Servolenkung umfassend einen Elektromotor mit einer Motorwelle und ein zuvor genanntes Schraubradgetriebe vorgesehen, wobei die Motorwelle die Welle des Schraubradgetriebes antreibt.

Dabei ist es vorteilhaft, wenn das Schraubrad auf einer Lenkwelle eines Kraftfahrzeuges drehfest angeordnet ist.

Bei der Montage der antriebsseitigen Lageranordnung werden bevorzugt die Wellfedern jeweils in die entsprechende Lagerschale im Bereich der Stufe positioniert. In diesem Bereich ist die Spannkraft am höchsten. Durch die asymmetrische Vorspannung der Wellfeder kann der Schwenkpunkt der antriebsseitigen Lageranordnung aus der Lagermitte heraus, in die Verzahnungsebene von Schneckenwelle und Schneckenrad gelegt werden. In der Verzahnungsebene stehen die Schneckenwelle und das Schneckenrad in Eingriff. Ein durch die Verzahnungskräfte auftretendes Reaktionsmoment in der Lageranordnung kann somit verhindert werden. Weiterhin können asymmetrische Zahnseparationskräfte bei den unterschiedlichen Drehrichtungen des Schneckenrades eliminiert werden, wodurch auch eine asymmetrische Reibung der Verzahnung des Schneckenradgetriebes unterbunden wird.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine räumliche Darstellung eines Schneckengetriebes einer elektro die rechnung habe ich zu ihrer information beigefügtmechanischen Servolenkung,
- Figur 2:: eine detaillierte Darstellung des Getriebes der Figur 1 reduziert auf einen Elektromotor und eine mit einem Schneckenrad in Eingriff stehende Schneckenwelle,
- Figur 3:: eine räumliche Darstellung der zusammengesetzten Lageranordnung,
- Figur 4:: eine Explosionszeichnung der erfindungsgemäßen Lageranordnung der Schneckenwelle,
- Figur 4a:: eine vergrößerte Ansicht der Innenseite der Lagerschale aus Figur 4,
- Figur 5:: eine räumliche Ansicht einer Lagerschale der erfindungsgemäßen Lageranordnung, sowie
- Figur 6:: einen Längsschnitt durch die Schneckenwelle mit erfindungsgemäßer Lageranordnung.

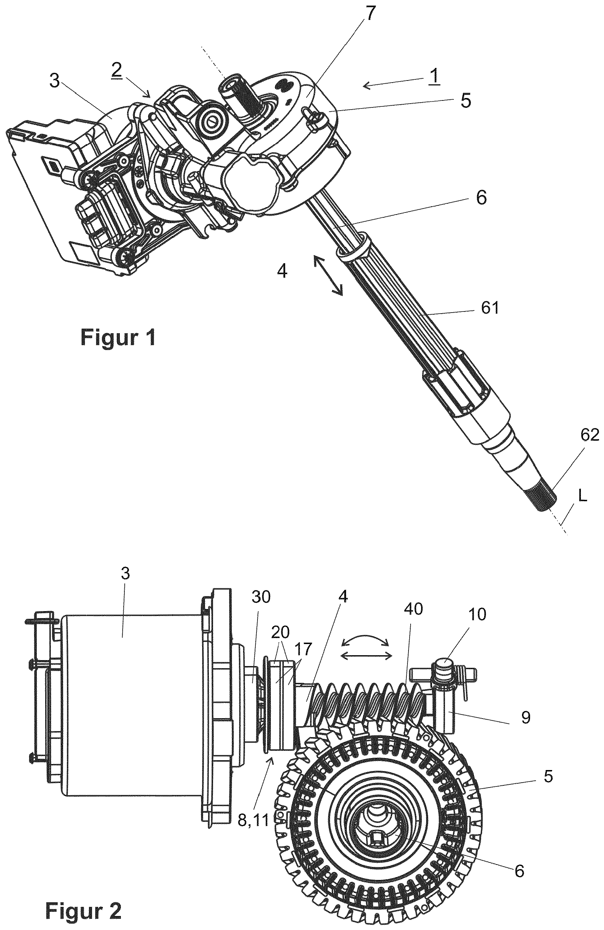

Figur 1 zeigt eine Hilfskraftlenkung 1, die an einer Lenkwelle 6 angebracht ist, welche um ihre Längsachse L, die Lenkwellenachse, drehbar gelagert ist. Die Lenkwelle 6 ist in einem hinteren Lenkwellenteil 61 drehfest, aber in Richtung der Längsachse L verstellbar, wie mit dem Doppelpfeil angedeutet, um ein an einem Befestigungsabschnitt 62 angebrachtes, hier nicht dargestelltes Lenkrad in Längsrichtung zu verstellen.

Die Hilfskraftlenkung weist ein Getriebegehäuse 7 auf, welches in der auseinander gezogenen Darstellung der Figur 2 weggelassen ist. In dem Getriebegehäuse 7 ist ein Schneckenrad 5, welches drehfest mit der Lenkwelle 6 verbunden ist, um die Längsachse L drehbar gelagert. Eine Schneckenwelle 4 steht zur Bildung eines Schneckengetriebes mit dem Schneckenrad 5 in Verzahnungseingriff.

Ein Elektromotor oder ein Servomotor 3 treibt die Schneckenwelle 4 über eine Motorwelle, die über eine Kupplung 30 bestehend aus zwei Kupplungsteilen mit der Schneckenwelle drehfest gekoppelt ist, an. Die Schneckenwelle 4 steht mit ihrer Schnecke 40 in Eingriff mit einem Schneckenrad 5, das mit einem Ritzel oder, wie hier dargestellt, mit der unteren Lenkwelle 6 drehfest verbunden ist. Bei einem Betrieb des Elektromotors 3 wird die Schneckenwelle 4 angetrieben und das Schneckenrad 5 dreht sich entsprechend um eine Drehunterstützung für die untere Lenkwelle 6 bereitzustellen.

Figur 2 zeigt die Schneckenwelle 4 mit einer antriebsseitigen Lageranordnung 8 und einer antriebsfernen Lageranordnung 9 und das mit der Schneckenwelle 4 kämmende Schneckenrad 5 in einer perspektivischen Darstellung, wobei auf die Komponenten des Getriebegehäuses verzichtet wurde.

Die Schneckenwelle 4 kämmt über die Schneckenverzahnung 40 mit dem Schneckenrad 5. Das Schneckenrad 5 wiederum ist drehfest mit der Lenkwelle 6 verbunden, die zwischen einem nicht dargestellten Lenkrad und dem eigentlichen Lenkgetriebe des Kraftfahrzeugs verläuft. Die genannten Bauelemente sind in einem nicht dargestellten gemeinsamen Getriebegehäuse gelagert.

Die Schneckenwelle 4 ist dabei in dem Getriebegehäuse 7 mittels der antriebsseitigen Lageranordnung 8 und der antriebsfernen Lageranordnung 9 gelagert. Die antriebsferne Lageranordnung 9 weist ein Wälzlager auf, welches als Festlager 11 ausgebildet ist. Die Lage der Schneckenwelle 4 ist in Bezug auf das Schneckenrad 5 mittels einer Vorspanneinrichtung 10 im Bereich der antriebsfernen Lageranordnung 9 einstellbar. Die antriebsseitige Lageranordnung 8 weist das Festlager 11 auf, das Schwenkbewegungen um eine Schwenkachse und geringfügige Axialbewegungen gegenüber dem Getriebegehäuse durch eine entsprechende Vorspannung im Gehäuse 7 zulässt.

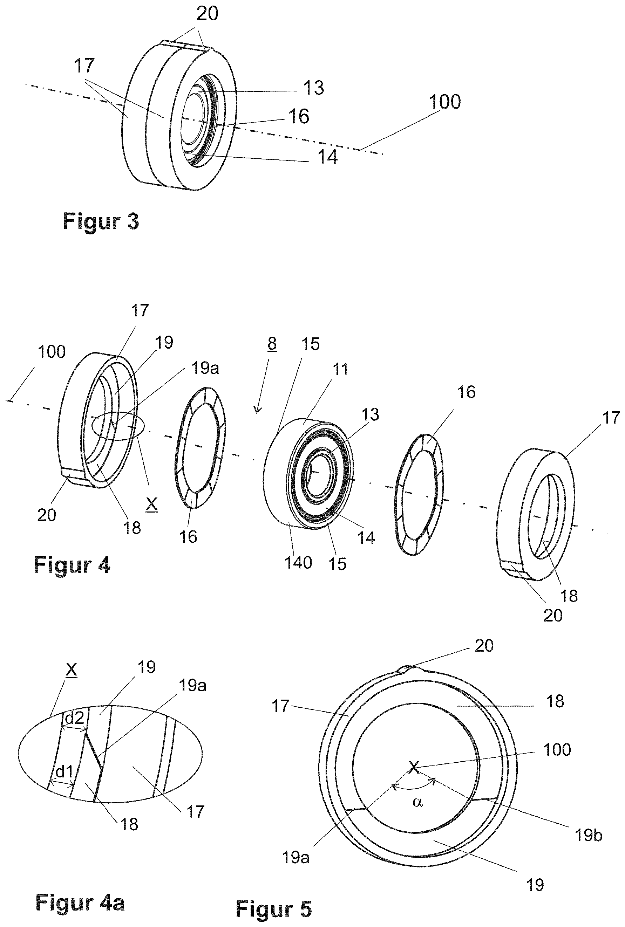

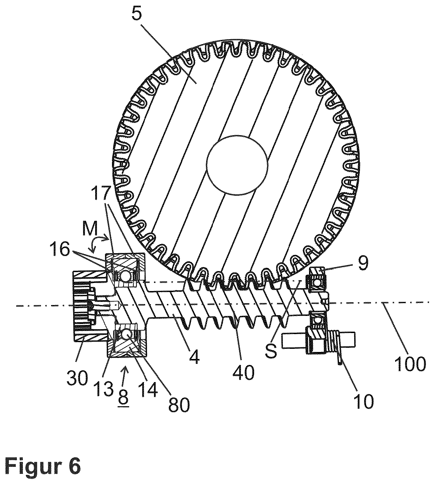

Die antriebsseitige Lageranordnung 8 und deren Funktionsprinzip ist in den Figuren 3 bis 6 im Detail dargestellt. Das Festlager 11 weist, wie in Figur 6 dargestellt, ein Wälzlager 12 mit einem Innenring 13, Wälzkörpern 80 und einem Außenring 14 auf. Die Wälzkörper 80 laufen in Rillen zwischen dem Innenring 13 und dem Außenring 14. Der Außenring 14 ist rotationssymmetrisch ausgebildet. Der Innenring 13 weist eine innenzylindrische Mantelfläche für einen Festsitz auf der Schneckenwelle auf.

Die beiden Stirnseiten 15 des Wälzlagers 12 stehen jeweils in Anlage mit einem Federelement 16, insbesondere eine hier dargestellte Wellfeder, die ein Kippen oder Verschwenken des Wälzlagers 12 sicherstellt. Die Stirnseiten sind eben oder plan, das heißt, sie weisen keine Erhebungen, Abkantungen oder Ausnehmungen auf. Die Wellfeder 16 weist dabei einen Außendurchmesser auf, der im Wesentlichen dem Außendurchmesser des Außenringes 14 des Wälzlagers 12 entspricht. Der Innendurchmesser der Wellfeder 16 kann so gewählt sein, dass die Wellfeder 16 mindestens einen Teil des Innenrings 13 des Wälzkörpers 12 abdeckt. Die Wellfedern 16 sind dabei so angeordnet, dass ihre Mitten in etwa auf einer Drehachse 100 des Wälzlagers 12 liegen. Die beiden Wellfedern 16 sind bevorzugt identisch ausgebildet. Das Wälzlager 12 und die beiden Wellfedern 16 sind von zwei Lagerschalen 17 umschlossen, die im Wesentlichen kreiszylindrisch ausgeformt sind und das Festlager im unbelasteten Zustand konzentrisch umgeben. Die Lagerschalen 17 weisen jeweils auf der Innenseite einen Sitz 18 für eine Wellfeder 16 auf. Der Sitz 18 wird auf der Innenseite durch einen Bereich mit einem kleineren Innendurchmesser gebildet. Der Sitz 18 weist einen in den Figuren 4 bis 6 gezeigten Vorsprung 19a, 19b in Form einer Stufe 19 auf. Die Stufe 19 ragt in Richtung der Drehachse 100 hervor und erstreckt sich in Radialrichtung der Drehachse über die gesamte Breite des Sitzes 18. Entlang des Innenumfanges der Lagerschale 17 nimmt die Stufe 19 nur einen Teil ein, bevorzugt einen definierten Winkelbereich α bezogen auf den Innenumfang der Lagerschale 17 zwischen 60° und 180°, wie in Figur 5 dargestellt. Der Sitz 18 mit der Stufe 19 bildet somit eine asymmetrische Auflagefläche für die Wellfeder 16 in der Lagerschale 17. Um sicher zugehen, dass die Stufen 19 gleich orientiert sind und sich im eingebauten Zustand des Lagers in dem Getriebegehäuse gegenüberliegen, weist jede Lagerschale 17 einen Vorsprung 20 auf der Außenseite auf. Der Vorsprung 20 liegt in Umfangsrichtung bevorzugt gegenüber der Stufe 19. Das Getriebegehäuse hat eine entsprechende Aussparung für die Vorsprünge der Lagerschalen. So wird sichergestellt, dass die Lagerschalen bzw. die antriebsseitige Lageranordnung nur in eine Richtung eingebaut werden kann.

Bei der Montage der antriebsseitigen Lageranordnung werden die Wellfedern jeweils in die entsprechende Lagerschale im Bereich der Stufe positioniert. In diesem Bereich ist die Spannkraft am höchsten. Durch die asymmetrische Vorspannung der Wellfeder 16 kann der Schwenkpunkt der antriebsseitigen Lageranordnung 8 aus der Lagermitte heraus, in die Verzahnungsebene S von Schneckenwelle 4 und Schneckenrad 5 gelegt werden, wie in Figur 6 dargestellt. In der Verzahnungsebene stehen die Schneckenwelle 4 und das Schneckenrad 5 in Eingriff. Ein durch die Verzahnungskräfte auftretendes Reaktionsmoment in der Lageranordnung kann somit verhindert werden. Weiterhin können asymmetrische Zahnseparationskräfte bei den unterschiedlichen Drehrichtungen des Schneckenrades eliminiert werden, wodurch auch eine asymmetrische Reibung der Verzahnung des Schneckenradgetriebes unterbunden wird. Vorzugsweise verläuft die Schwenkachse S parallel zu der Drehachse 100 im Eingriffsbereich zwischen Schneckenwelle 4 und Schneckenrad 5, sodass dadurch kein Drehmoment M in der Schwenkachse resultiert.

Die Tiefe der Lagerschalen 17 im Bereich der Stufen 19 oder die Höhe der Stufe 19 gibt das nötige Spiel und Vorspannung für die Wellfeder vor. Die Lagerschalen 17 sind, wie in den Figuren 3 und 4 bis 6 dargestellt, topfförmig geformt und weisen eine Bohrung im Boden zum Durchführen der Welle 4 auf, wobei auf dem Boden der Sitz 18 und die hervorstehende Stufe 19 ausgebildet sind, an welcher das Federelement 16 anliegt. Die Lagerschalen weisen eine Lagerschalentiefe auf. Die Lagerschalentiefe definiert einen Abstand d1, d2 der Lagerschale 17 zwischen dem Boden 18 der Lagerschale und der Aussenumfangsfläche der Lagerschale. Die Lagerschalentiefe ist durch die Stufe 19 im Bereich der Vorsprünge 19a, 19b in eine erste Lagerschalentiefe d1 und eine zweite Lagerschalentiefe d2 unterteilt. Die erste Lagerschalentiefe d1 ist dabei kleiner ausgebildet als die zweite Lagerschalentiefe d2. Die Stufe 19 stellt mit ihren Vorsprüngen 19a,19b damit einen Übergang von der ersten Lagerschalentiefe d1 zu der zweiten Lagerschalentiefe d2 dar. Der Bereich mit der ersten Lagerschalentiefe d1 nimmt bevorzugt 2/3 von der Bodenumfangsfläche, beziehungsweise 2/3 von der Innenseite der Lagerschale 17 im Bereich des kleineren Innendurchmessers, ein, während der Bereich mit der zweiten Lagerschalentiefe d2 bevorzugt 1/3 der Bodenumfangsfläche der Lagerschale 17 einnimmt. Der zweite Bereich mit der grösseren Breite ist bevorzugt in Umfangsrichtung des Schraubrads 5 angeordnet.

Die Stufe 19 stellt mittels der Vorsprünge 19a, 19b einen Übergang von einem ersten Bereich mit einer ersten Lagerschalentiefe d1 zu einem zweiten Bereich mit einer zweiten Lagerschalentiefe d2 dar, wie in Figur 4a dargestellt. Als Lagerschalentiefe im Bereich der Stufe ist der Abstand der Lagerschalen 17 zwischen Sitz 18 und der Aussenumfangsfläche der Lagerschale 19 zu verstehen. Die erste Tiefe d1 ist dabei kleiner ausgebildet als die zweite Tiefe d2. Der zweite Bereich mit der grösseren Tiefe d2 ist bevorzugt in Umfangsrichtung des Schneckenrads 5 angeordnet.

Die Lagerschalen sind bevorzugt aus Kunststoff gebildet, insbesondere durch Spritzgießen.

## Patentansprüche

1. Schraubradgetriebe für eine elektromechanische Servolenkung umfassend eine mit einem Schraubrad (5) kämmende Welle (4), wobei die Welle (4) in einem Getriebegehäuse (7) angeordnet ist und an ihrem ersten Ende in einer antriebsseitigen Lageranordnung (8) um eine Drehachse (100) drehbar gelagert ist und an ihrem zweiten Ende in einer ersten Lageranordnung (9) in dem Getriebegehäuse (7) gelagert ist, wobei die erste Lageranordnung (8) ein Festlager (11) aufweist, **dadurch gekennzeichnet, dass** das Festlager (11) von zwei Lagerschalen (17) umschlossen ist, wobei auf beiden Stirnseiten des Festlagers (11) jeweils ein Federelement (16) zwischen Festlager (11) und entsprechender Lagerschale (17) angeordnet ist, und wobei die Federelemente (16) das Festlager (11) asymmetrisch vorspannen, derart, dass eine Schwenkachse (S), um die die Welle (4) in Richtung des Schraubrades (5) schwenkbar ist, im Bereich der Verzahnungsebene von Welle (4) und Schraubrad (5) angeordnet ist.

2. Schraubradgetriebe nach Anspruch 1, **dadurch gekennzeichnet, dass** die Lagerschalen (17) jeweils einen Sitz (18) mit mindestens einer hervorstehenden Stufe (19) für ein Federelement (16) aufweisen, wobei die Stufen (19) der beiden Lagerschalen (17) die Schwenkachse definieren.

3. Schraubradgetriebe nach einem der vorhergehenden Ansprüche,
**dadurch gekennzeichnet, dass** die mindestens eine Stufe (19) sich jeweils in Umfangsrichtung bezogen auf den Innenumfang der Lagerschale 17 über einen Winkelbereich zwischen 60° und 180° erstreckt.

4. Schraubradgetriebe nach einem der vorhergehenden Ansprüche,
**dadurch gekennzeichnet, dass** die Stufen (19) der beiden Lagerschalen (17) in Umfangsrichtung gleich orientiert sind und sich gegenüberliegen.

5. Schraubradgetriebe nach Anspruch 4, **dadurch gekennzeichnet, dass** die Stufen (19) der beiden Lagerschalen (17) in Umfangsrichtung im Bereich des Schraubrades (5) liegen.

6. Schraubradgetriebe nach einem der vorhergehenden Ansprüche,
**dadurch gekennzeichnet, dass** die Federelemente (16) ringförmig sind und einen Außendurchmesser aufweisen, der in etwa dem Außendurchmesser des Festlagers (11) entspricht.

7. Schraubradgetriebe nach einem der vorhergehenden Ansprüche,
**dadurch gekennzeichnet, dass** das Festlager (11) ein Wälzlager ist.

8. Schraubradgetriebe nach einem der vorhergehenden Ansprüche,
**dadurch gekennzeichnet, dass** die Federelemente (16) Wellfedern sind.

9. Schraubradgetriebe nach einem der vorhergehenden Ansprüche,
**dadurch gekennzeichnet, dass** die Lagerschalen (17) jeweils auf der Außenumfangsseite mindestens einen Vorsprung (20) als Verdrehsicherung aufweisen, welcher in korrespondierende Ausnehmungen des Getriebegehäuses (7) greift.

10. Schraubradgetriebe nach einem der vorhergehenden Ansprüche,
**dadurch gekennzeichnet, dass** die zweite Lageranordnung (9) eine Vorspanneinrichtung (10) aufweist, mittels derer die Lage der Welle (4) in Bezug auf das Schraubrad (5) einstellbar ist.

11. Schraubradgetriebe nach einem der vorhergehenden Ansprüche,
**dadurch gekennzeichnet, dass** das Schraubrad (5) ein Schneckenrad und die Welle (4) eine Schneckenwelle ist.

12. Schraubradgetriebe nach einem der vorhergehenden Ansprüche,
**dadurch gekennzeichnet, dass** die Lagerschalen (17) aus Kunststoff gefertigt sind.

13. Elektromechanische Servolenkung umfassend einen Elektromotor (3) mit einer Motorwelle und ein Schraubradgetriebe (1) nach einem der Ansprüche 1 bis 12, wobei die Motorwelle die Welle (4) des Schraubradgetriebes (1) antreibt.

14. Elektromechanische Servolenkung nach Anspruch 13, **dadurch gekennzeichnet, dass** das Schraubrad (5) auf einer Lenkwelle (6) eines Kraftfahrzeuges drehfest angeordnet ist.

## Claims

1. A helical gear transmission for an electromechanical power-assisted steering mechanism, comprising a shaft (4) which meshes with a helical gear (5), wherein the shaft (4) is disposed in a transmission housing (7) and at the first end of said shaft (4) in a drive-side bearing assembly (8) is mounted so as to be rotatable about a rotation axis (100), and at the second end of said shaft (4) in a first bearing assembly (9) is mounted in the transmission housing (7), wherein the first bearing assembly (8) has a fixed bearing (11), **characterized in that** the fixed bearing (11) is enclosed by two bearing shells (17), wherein on both end sides of the fixed bearing (11) one spring element (16) is in each case disposed between the fixed bearing (11) and the respective bearing shell (17), and wherein the spring elements (16) asymmetrically pre-load the fixed bearing (11) in such a manner that a pivot axis (S) about which the shaft (4) is pivotable in the direction of the helical gear (5) is disposed in the region of the toothing plane of the shaft (4) and the helical gear (5).

2. The helical gear transmission as claimed in claim 1, **characterized in that** the bearing shells (17) have in each case one seat (18) having at least one projecting step (19) for a spring element (16), wherein the steps (19) of the two bearing shells (17) define the pivot axis.

3. The helical gear transmission as claimed in one of the preceding claims,
**characterized in that** the at least one step (19) in terms of the internal circumference of the bearing shells (17) in the circumferential direction extends in each case across an angular range between 60° and 180°.

4. The helical gear transmission as claimed in one of the preceding claims,
**characterized in that** the steps (19) of the two bearing shells (17) in the circumferential direction are identically oriented and mutually opposite.

5. The helical gear transmission as claimed in claim 4, **characterized in that** the steps (19) of the two bearing shells (17) in the circumferential direction lie in the region of the helical gear (5).

6. The helical gear transmission as claimed in one of the preceding claims,
**characterized in that** the spring elements (16) are annular and have an external diameter which corresponds approximately to the external diameter of the fixed bearing (11).

7. The helical gear transmission as claimed in one of the preceding claims,
**characterized in that** the fixed bearing (11) is a roller bearing.

8. The helical gear transmission as claimed in one of the preceding claims,
**characterized in that** the spring elements (16) are corrugated springs.

9. The helical gear transmission as claimed in one of the preceding claims,
**characterized in that** the bearing shells (17) on the the external circumferential side have in each case at least one protrusion (20) as an anti-rotation safeguard which engages in communicating recesses of the transmission housing (7).

10. The helical gear transmission as claimed in one of the preceding claims,
**characterized in that** the second bearing assembly (9) has a preloading installation (10) by means of which the position of the shaft (4) in terms of the helical gear (5) is adjustable.

11. The helical gear transmission as claimed in one of the preceding claims,
**characterized in that** the helical gear (5) is a worm gear and the shaft (4) is a worm shaft.

12. The helical gear transmission as claimed in one of the preceding claims,
**characterized in that** the bearing shells (17) are made from plastics material.

13. An electromechanical power-assisted steering mechanism comprising an electric motor (3) having a motor shaft, and a helical gear transmission (1) as claimed in one of claims 1 to 12, wherein the motor shaft drives the shaft (4) of the helical gear transmission (1).

14. The electromechanical power-assisted steering mechanism as claimed in claim 13, **characterized in that** the helical gear (5) is disposed so as to be rotationally fixed on a steering shaft (6) of a motor vehicle.

## Revendications

1. Engrenage à roue hélicoïdale pour une direction assistée électromécanique, comprenant un arbre (4) s'engrenant avec une roue hélicoïdale (5), l'arbre (4) étant disposé dans un carter d'engrenage (7) et étant monté à sa première extrémité dans un ensemble de palier (8) côté entraînement de manière à pouvoir tourner autour d'un axe de rotation (100) et étant monté à sa deuxième extrémité dans un premier ensemble de palier (9) dans le carter d'engrenage (7), le premier ensemble de palier (8) présentant un palier fixe (11),
**caractérisé en ce que** le palier fixe (11) est entouré de deux coquilles de coussinet (17), dans lequel, sur les deux faces frontales du palier fixe (11), respectivement un élément faisant ressort (16) est disposé entre le palier fixe (11) et la coquille de coussinet (17) correspondante, et les éléments faisant ressort (16) précontraignant le palier fixe (11) de manière asymétrique de telle sorte qu'un axe de pivotement (S), autour duquel l'arbre (4) peut pivoter en direction de la roue hélicoïdale (5), est disposé dans la zone du plan d'engrenage de l'arbre (4) et de la roue hélicoïdale (5).

2. Engrenage à roue hélicoïdale selon la revendication 1, **caractérisé en ce que** les coquilles de coussinet (17) présentent respectivement un siège (18) doté d'au moins un gradin (19) faisant saillie pour un élément faisant ressort (16), les gradins (19) des deux coquilles de coussinet (17) définissant l'axe de pivotement.

3. Engrenage à roue hélicoïdale selon l'une quelconque des revendications précédentes, **caractérisé en ce que** ledit au moins un gradin (19) s'étend respectivement dans la direction circonférentielle par rapport à la circonférence intérieure de la coquille de coussinet 17 sur une plage angulaire comprise entre 60° et 180°.

4. Engrenage à roue hélicoïdale selon l'une quelconque des revendications précédentes, **caractérisé en ce que** les gradins (19) des deux coquilles de coussinet (17) sont orientés de la même manière dans la direction circonférentielle et sont opposés l'un à l'autre.

5. Engrenage à roue hélicoïdale selon la revendication 4, **caractérisé en ce que** les gradins (19) des deux coquilles de coussinet (17) se trouvent dans la direction circonférentielle dans la zone de la roue hélicoïdale (5).

6. Engrenage à roue hélicoïdale selon l'une quelconque des revendications précédentes, **caractérisé en ce que** les éléments faisant ressort (16) sont annulaires et présentent un diamètre extérieur qui correspond approximativement au diamètre extérieur du palier fixe (11).

7. Engrenage à roue hélicoïdale selon l'une quelconque des revendications précédentes, **caractérisé en ce que** le palier fixe (11) est un palier à roulement.

8. Engrenage à roue hélicoïdale selon l'une quelconque des revendications précédentes, **caractérisé en ce que** les éléments faisant ressort (16) sont des rondelles ondulées.

9. Engrenage à roue hélicoïdale selon l'une quelconque des revendications précédentes, **caractérisé en ce que** les coquilles de coussinet (17) présentent respectivement sur le côté circonférentiel extérieur au moins une saillie (20) comme dispositif anti-rotation qui vient en prise dans des creux correspondants du carter d'engrenage (7).

10. Engrenage à roue hélicoïdale selon l'une quelconque des revendications précédentes, **caractérisé en ce que** le deuxième ensemble de palier (9) présente un dispositif de précontrainte (10) au moyen duquel la position de l'arbre (4) est réglable par rapport à la roue hélicoïdale (5).

11. Engrenage à roue hélicoïdale selon l'une quelconque des revendications précédentes, **caractérisé en ce que** la roue hélicoïdale (5) est une vis sans fin et l'arbre (4) est un arbre à vis sans fin.

12. Engrenage à roue hélicoïdale selon l'une quelconque des revendications précédentes, **caractérisé en ce que** les coquilles de coussinet (17) sont fabriquées en matière plastique.

13. Direction assistée électromécanique, comprenant un moteur électrique (3) doté d'un arbre moteur et d'un engrenage à roue hélicoïdale (1) selon l'une quelconque des revendications 1 à 12, l'arbre moteur entraînant l'arbre (4) de l'engrenage à roue hélicoïdale (1).

14. Direction assistée électromécanique selon la revendication 13, **caractérisée en ce que** la roue hélicoïdale (5) est disposée de manière verrouillée en rotation sur un arbre de direction (6) d'un véhicule automobile.
